# EUROPÄISCHE PATENTSCHRIFT

(11) **EP 0 856 118 B1**
(45) Veröffentlichungstag und Bekanntmachung des Hinweises auf die Patenterteilung: **05.12.2001**
(21) Anmeldenummer: 96943862.1
(22) Anmeldetag: 02.10.1996
(51) Int. Cl.: F16L 55/26, G21C 17/017

(54) **ROHRINNENMANIPULATOR ZUM PRÜFEN ODER BEARBEITEN DER INNENOBERFLÄCHE EINES ROHRES**
INNER MANIPULATOR FOR TESTING OR PROCESSING THE INNER SURFACE OF A PIPE
MANIPULATEUR DU TYPE CHARIOT POUR LE CONTROLE OU LE TRAITEMENT DE LA SURFACE INTERIEURE D'UNE CONDUITE

(30) Priorität: 16.10.1995 DE 19538441
(43) Veröffentlichungstag der Anmeldung: 05.08.1998
(73) Patentinhaber: Framatome ANP GmbH, 91058 Erlangen (DE)
(72) Erfinder: DIPPEL, Bruno, D-91099 Poxdorf (DE); STROBEL, Reinhardt, D-90471 Nürnberg (DE)
(74) Vertreter: Mörtel & Höfner
(86) Internationale Anmeldenummer: DE9601904
(87) Internationale Veröffentlichungsnummer: WO9714903

(56) Entgegenhaltungen:
- WO-A-97/02452
- DE-A- 3 730 315
- DE-U- 29 507 250
- US-A- 4 648 454
- US-A- 4 677 865
- US-A- 5 056 269

## Beschreibung

Die Erfindung bezieht sich auf einen Rohrinnenmanipulator zum Prüfen oder Bearbeiten der Innenoberfläche eines Rohres.

Rohrleitungen in sicherheitstechnisch relevanten Anlagenteilen, beispielsweise im Primärkreis eines Kernkraftwerkes, müssen regelmäßigen Prüf- oder Wartungsarbeiten unterzogen werden. Insbesondere ist eine regelmäßige Innenprüfung der Schweißnähte solcher Rohrleitungen erforderlich. Die zum Prüfen oder Bearbeiten notwendigen Geräte werden dabei in der Regel von selbstfahrenden Fahrzeugen in Prüf- bzw. Arbeitsposition gebracht.

Ein solcher selbstfahrender Rohrinnenmanipulator ist beispielsweise aus der deutschen Patentschrift 34 12 519 C2 bekannt. Bei dem dort offenbarten Rohrinnenmanipulator ist zwischen zwei Stützflanschen ein radial verstellbarer Prüfsystemträger angeordnet, der um die Längsachse des Rohrinnenmanipulators gedreht werden kann und auf diese Weise eine Prüfung der Innenoberfläche des Rohres auf dem gesamten Umfang ermöglicht. Da der Prüfsystemträger in der Mitte des Fahrgestells zwischen einem hinteren und einem vorderen Stützflansch des Fahrzeuges angeordnet ist, können Schweißnähte, die im Mündungsbereich des Rohres in einen größeren Behälter liegen, nicht mehr geprüft werden.

Aus der deutschen Offenlegungsschrift DE 38 03 274 A1 ist eine Vorrichtung zur Fernsehuntersuchung von Rohrleitungen bekannt, bei der auf einem in dieser Rohrleitung verfahrbaren Wagen ein Träger für eine Fernsehkamera um die Längsachse des Wagens drehbar gelagert ist. Auf diesem Träger sind um eine zu dieser Längsachse senkrechte Achse schwenkbar Führungsmittel für eine verschiebbare Welle angeordnet, die an ihrem freien Ende die Fernsehkamera trägt. Auch mit dieser Vorrichtung können Schweißnähte, die im Mündungsbereich des Rohres in einem größeren Behälter liegen, nicht mehr abgefahren werden, da die Schwenkachse des Führungsmittels mittig zwischen den Achsen der Laufräder angeordnet ist.

Aus der europäischen Patentschrift 0 204 694 ist ein Rohrinnenmanipulator bekannt, bei dem eine Bearbeitungsvorrichtung in einem Drehbügel gelagert ist, der an einem an der Stirnseite des Fahrzeugs drehbar angeordneten Lager mit L-förmigem Querschnitt angebracht ist. Mit einem solchen bekannten Rohrinnenmanipulator können zwar von dem im Rohr positionierten Fahrzeug Prüf- oder Bearbeitungspositionen im Mündungsbereich des Rohres erreicht werden, jedoch ist dieser bekannte Rohrinnenmanipulator für Schweißnähte mit komplizierteren Geometrien oder für Schweißnähte im Krümmungsbereich eines Rohres nicht oder nur bedingt geeignet.

Aus der deutschen Offenlegungsschrift DE 42 43 529 A1 ist ein Rohrinnenmanipulator bekannt, an dem stirnseitig ein axial verstellbarer Ausleger angeordnet ist, an dessen freiem Ende eine Arbeitskonsole für ein Bearbeitungsgerät angeordnet ist. Diese Arbeitskonsole ist über zwei schwenkbare Führungsstangen quer zur Längsrichtung des Rohrinnenmanipulators verstellbar. Dieser bekannte Rohrinnenmanipulator hat eine relativ lange Bauform, so daß mit ihm enge Rohrkrümmungen nicht mehr durchfahren werden können.

Bei dem aus dem deutschen Gebrauchsmuster DE 295 07 250 U1 bekannten Manipulator zum Innenbearbeiten von Rohren ist eine Bearbeitungsvorrichtung an einem Drehkopf angeordnet, der stirnseitig an einem rohrförmigen Innengehäuse angeordnet ist, das axial gegenüber einem das Innengehäuse aufnehmenden Außengehäuse verschiebbar ist, so daß es aus diesem ausfahrbar oder in dieses einfahrbar ist. Durch diese Vorrichtung wird zwar die Reichweite der Bearbeitungsvorrichtung bei fixiertem Rohrinnenmanipulator erhöht, jedoch ist auch in diesem Fall eine Bearbeitung oder Prüfung von Schweißnähten mit komplizierten Geometrien oder Schweißnähten im Krümmungsbereich eines Rohres nicht oder nur bedingt möglich.

Aus der deutschen Offenlegungsschrift DE 37 30 315 ist ein Rohrinnenmanipulator bekannt, bei dem an einem innerhalb eines Rohres Fahrbaren Fahrgestell ein mehrgliedriger Schwenkarm in Richtung einer Längsachse des Fahrgestells verschiebbar angeordnet ist, der an seinem Freien Ende einen Systemträgen für eine Arbeitsvorrichtung trägt.

Der Erfindung liegt die Aufgabe zugrunde, einen Rohrinnenmanipulator zum Prüfen oder Bearbeiten der Innenoberfläche eines Rohres anzugeben, der zum Einsatz im Mündungs- oder Krümmungsbereich von Rohren geeignet ist, und auch enge Rohrkrümmungen durchfahren kann.

Die genannte Aufgabe wird gelöst mit den Merkmalen des Patentanspruches 1. Durch die Verwendung eines mehrgliedrigen Schwenkarmes für ein Prüfsystem oder eine Arbeitsvorrichtung, der in Richtung einer Längsachse des Fahrgestells verschiebbar angeordnet ist und wenigstens teilweise in das Innere des Fahrgestells einfahrbar ist, können Prüf- oder Arbeitspositionen erreicht werden, die relativ weit vom Fahrgestell entfernt sind, ohne daß hiermit ein Verlust an Wendigkeit des Rohrinnenmanipulators verbunden ist, da die gesamte Baulänge durch Einfahren des Auslegers in das Innere des Fahrgestells verkürzt werden kann, so daß im eingefahrenen Zustand auch enge Rohrkrümmungen durchfahren werden können. Da der Schwenkarm im gestreckten Zustand auch in relativ schlanke Fahrgestelle eingefahren werden kann, ist durch diese Maßnahme ein kompakter Aufbau des Rohrinnenmanipulators möglich. Zugleich ist es mit einem solchen Schwenkarm durch Anwinkeln eines Gliedes möglich, Prüf- oder Bearbeitungsbahnen zu erfassen, deren Abstand von einer Längsachse des Rohrinnenmanipulators größer als sein Außendurchmesser ist, den er bei zurückgefahrenem Schwenkarm einnimmt.

In einer vorteilhaften Ausgestaltung der Erfindung ist zum Verschieben des Schwenkarms eine innerhalb des Fahrgestells drehbar gelagerte Gewindespindel vorgesehen, auf die der Schwenkarm gelagert ist. Diese Gewindespindel ist vorzugsweise parallel und beabstandet zur Längsachse des Fahrgestells angeordnet. Durch diese Maßnahme ist es möglich, den Schwenkarm ohne Behinderung durch die Gewindespindel vollständig in das Innere des Fahrgestells einzufahren.

In einer weiteren vorteilhaften Ausgestaltung der Erfindung ist der Schwenkarm am Fahrgestell drehbar um eine zu einer Längsachse des Fahrgestells parallele Drehachse gelagert. Durch diese Maßnahmen können Arbeits- oder Prüfpositionen am gesamten Umfang des Rohres erreicht werden.

Insbesondere ist die Gewindespindel in einer drehbar im Fahrgestell gelagerten Hohlwelle angeordnet, die zugleich den Innenraum zur Aufnahme des Schwenkarms bilden. Dadurch ist ein kompakter Aufbau des Rohrinnenmanipulators möglich.

In einer weiteren vorteilhaften Ausgestaltung ist am Fahrgestell eine Dreheinrichtung zum Drehen des Rohrinnenmanipulators um seine Längsachse angeordnet. Diese Dreheinrichtung umfaßt insbesondere ein radial ausfahrbares Lagergestell, in dem wenigstens ein in Umfangsrichtung des Rohres abrollbares Laufrad gelagert ist. Durch diese Maßnahme kann die Lage der zur Vorwärtsbewegung des Rohrinnenmanipulators vorgesehenen Rollen am Innenumfang des Rohres eingestellt werden. Auf diese Weise können im Inneren des Rohres sich befindende und in Längsrichtung gesehen versetzt zueinander angeordnete Hindernisse umfahren werden.

Zur weiteren Erläuterung der Erfindung wird auf die Ausführungsbeispiele der Zeichnung verwiesen, in deren
- FIG 1: ein Rohrinnenmanipulator gemäß der Erfindung in Prüfposition im Krümmungsbereich eines Rohres in einem Längsschnitt schematisch veranschaulicht ist. In
- FIG 2 und 3: ist ein Rohrinnenmanipulator gemäß der Erfindung in unterschiedlichen Fahrpositionen in einem Rohr jeweils in einer Draufsicht parallel zur Fahrtrichtung schematisch veranschaulicht.
- FIG 4 und 5: zeigen vorteilhafte Ausgestaltungen eines Schwenkarmes gemäß der Erfindung jeweils in einem vergrößerten Ausschnitt.In
- FIG 6: ist eine weitere vorteilhafte Ausgestaltung eines Rohrinnenmanipulators gemäß der Erfindung in einer Seitenansicht veranschaulicht. Anhand
- FIG 7: wird das Einbringen eines Rohrinnenmanipulators gemäß der Erfindung in eine Rohrleitung des Primarkreises eines Kernkraftwerkes veranschaulicht.

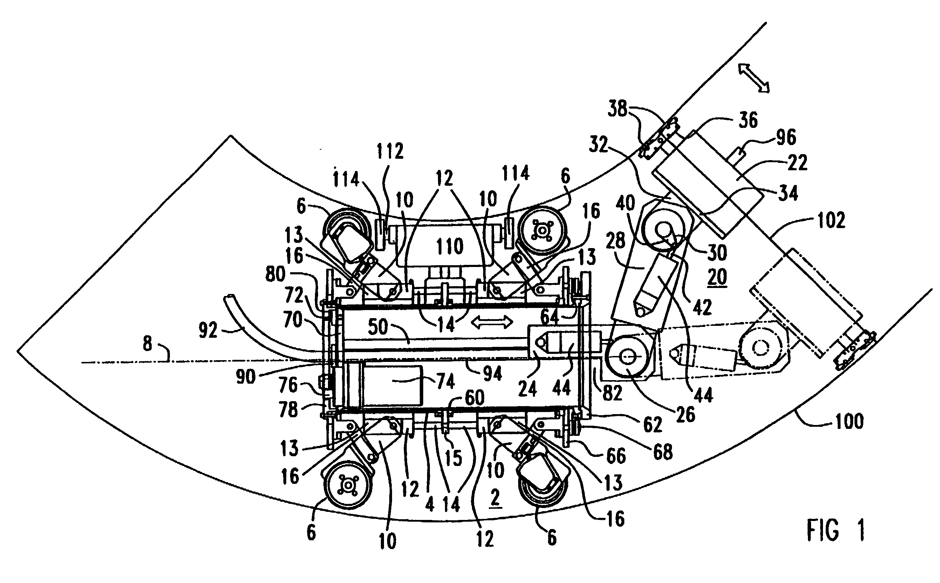

Entsprechend **FIG 1** umfaßt ein Rohrinnenmanipulator gemäß der Erfindung ein Fahrgestell 2 mit einem rohrförmigen Grundkörper 4, an dessen Umfang mehrere beispielsweise sechs oder acht Rollen 6 radial ausstellbar gelagert sind. Die Rollen 6 spannen zwei voneinander beabstandete und senkrecht zu einer Längsachse 8 des Fahrgestells 2 liegende Ebenen auf. Jede Rolle 6 ist in einem Arm 10 gelagert, der jeweils gelenkig mit einem den Grundkörper 4 verschiebbar umgebenden Ring 12 verbunden ist, wobei den Rollen 6 einer Ebene ein solcher Ring 12 zugeordnet ist. An jedem Ring 12 sind jeweils mehrere hydraulische Hubzylinder 13 fixiert, deren parallel zur Längsachse 8 verschiebbar gelagerte Kolbenstangen 14 sich mit ihren freien Enden in einem am Grundkörper 4 befestigten Stützring 15 abstützen, so daß die Ringe 12 durch eine Hubbewegung der Kolbenstangen 14 parallel zur Längsachse 8 auf dem Grundkörper 4 verschoben werden können. Jeder Arm 10 bildet gemeinsam mit einem schwenkbar am Grundkörper 4 gelagerten Hebel 16 ein Scheitelgelenk, das die Verschiebung des Rings 12 in eine Radialbewegung der Rollen 6 umwandelt, wobei die an einem Ring 12 angeordneten Rollen 6 einer Ebene gemeinsam und somit zentrisch ausgestellt werden.

Am Fahrgestell 2 ist ein Schwenkarm 20 gelagert, der an seinem freien Ende einen Systemträger 22 aufnimmt. Der Schwenkarm 20 umfaßt ein Basisglied 24, das am Fahrgestell 2 bezüglich einer quer zur Längsachse 8 des Fahrgestells 2 verlaufenden Achse drehfixiert angeordnet ist. Am Basisglied 24 ist schwenkbar in einem ersten Drehgelenk 26 ein schwenkbares Zwischenglied 28 angeordnet. Dieses Zwischenglied 28 nimmt an seinem vom ersten Drehgelenk 26 abgewandten Ende in einem zweiten Drehgelenk 30 ein schwenkbares Endglied 32 auf, an dem eine Montageplatte 34 für den Systemträger 22 befestigt ist. Die Drehachsen des ersten und zweiten Drehgelenks 26 und 30 sind zueinander parallel und zur Längsachse 8 senkrecht angeordnet.

Der Systemträger 22 umfaßt im Ausführungsbeispiel eine hydraulisch quer zur Drehachse des zweiten Drehgelenks 30 verschiebbare Prüfkopfhalterung 36, in der mehrere Prüfköpfe 38, beispielsweise Ultraschallprüfköpfe oder Wirbelstromprüfköpfe, federnd gelagert sind.

Die Gelenkwellen des ersten und zweiten Drehgelenks 26 bzw. 30 sind in der bevorzugten Ausgestaltung gemäß dem Ausführungsbeispiel der Figur jeweils mit einer Kurbel 40 versehen, die in der Figur in der aufgebrochenen Darstellung des zweiten Drehgelenks 30 sichtbar ist. Jede Kurbel 40 ist gelenkig mit einer Schubstange 42 eines Linearantriebs 44 verbunden. Der Linearantrieb 44 ist jeweils schwenkbar am Basisglied 24 bzw. am Zwischenglied 28 gelagert. Diese schwenkbare Lagerung ist zum Ausgleich der Kreisbewegung der Kurbel 40 erforderlich. Als Antriebe für die schwenkbaren Glieder 28, 32 des Schwenkarms 20 sind prinzipiell hydraulische oder elektrische Linear- oder Drehantriebe geeignet. Vorzugsweise ist die Verwendung eines elektrischen Linearantriebes vorgesehen, bei dem eine Drehbewegung über eine Spindelmutter in eine Längsbewegung einer die Schubstange 42 bildenden Spindel übertragen wird. Insbesondere von Vorteil ist ein sogenannter Rollengewindeantrieb, wie er beispielsweise unter der Produktbezeichnung "Künstlicher Muskel" bei der Firma Wittenstein Motion Control GmbH, DE, bezogen werden kann, und bei dem mit Hilfe einer Planeten-Wälz-Gewindespindel-Anordnung eine schnelle Rotationsbewegung in eine langsame Linearbewegung umgewandelt werden kann. Ein solcher Antrieb ermögliche bei kleinen Abmessungen hohe Stellkräfte und ermöglicht ein präzises Positionieren des Schwenkarms 20.

Das Basisglied 24 wird von einer Gewindespindel 50 aufgenommen, die drehbar im Innern des Fahrgestells 2 in einer Hohlwelle 60 gelagert ist. Die Gewindespindel 50 ist parallel zur Längsachse 8 angeordnet und von dieser beabstandet. Dies ist erforderlich, um den in Ausgangsposition entlang der Längsachse 8 des Fahrgestells 2 ausgerichteten Schwenkarm 20 in den durch die Hohlwelle 60 gebildeten Innenraum des Fahrgestells 2 ohne Behinderung durch die Gewindespindel 50 einfahren zu können.

Die Hohlwelle 60 ist drehbar im schalenförmigen Grundkörper 4 . des Fahrgestells 2 gelagert. An seiner dem Schwenkarm 20 zugewandten Stirnfläche weist die Hohlwelle 60 einen Ringflansch 62 auf, an dem ein Führungsring 64 fixiert ist. Dieser Führungsring 64 ist in mehreren an einem Ringflansch 66 des Grundkörpers 4 angeordneten Führungsrollen 68 geführt und durch eine V-förmige Nut in den Führungsrollen 68 gegen axiales Verrutschen gesichert.

An ihrem dem Schwenkarm 20 gegenüberliegenden Ende ist an der Hohlwelle 60 eine Abschlußplatte 70 angeordnet, die mit Flachrollen 72 versehen ist, die sich am Innenumfang des über die Hohlwelle 60 überstehenden Grundkörpers 4 abrollen. In dieser Abschlußplatte 70 ist ein Antrieb 74 zum Drehen der Hohlwelle 60 gelagert. Der Antrieb 74 greift mit einem Ritzel 76 in die Innenverzahnung eines an der Stirnfläche des Grundkörpers 4 befestigten Hohlkranzes 78 ein. Der Hohlkranz 78 weist einen zylindrischen Fortsatz 80 auf, der die Lauffläche für die Flachrollen 72 bildet. Der Antrieb 74, vorzugsweise ein elektrischer Antrieb, ist starr in der Hohlwelle 60 angeordnet und bewirkt eine Drehbewegung zwischen dem Grundkörper 4 und der Hohlwelle 60. Diese Drehbewegung überträgt sich auf das drehfixiert in der Hohlwelle gelagerte Basisglied 24 und bewirkt eine Drehbewegung des gesamten Schwenkarmes 20 um die Längsachse 8 des Fahrgestells 2.

Das erste Drehgelenk 26 ist am Basisglied 24 derart angeordnet, daß seine Drehachse von der Längsachse 8 des Fahrgestells 2 geschnitten wird. Dies hat den Vorteil, daß in geraden Rohrabschnitten beim Prüfen oder Bearbeiten einer ringförmigen Schweißnaht eine zusätzliche Korrektur der Bahn durch ein Betätigen der Linearantriebe 44 des Schwenkarms 20 nicht oder nur bei einer Ovalität des Rohres erforderlich ist.

Durch die seitlich versetzte Anordnung der Gewindespindel 50 relativ zur Längsachse 8 ist es möglich, den Schwenkarm 20 ohne Behinderung durch die Gewindespindel 50 vollständig in das Innere der Hohlwelle 60 zurückzufahren. Eine Aussparung 82 im Basisglied 24 nimmt im zurückgefahrenen Zustand den Antrieb 74 für die Drehbewegung der Hohlwelle 60 auf. Der Schwenkarm 20 läßt sich im Ausführungsbeispiel vollständig in das Innere der Hohlwelle 60 zurückfahren, so daß nur noch der Systemträger 22 über die Hohlwelle 60 und somit über das Fahrgestell 2 hinausragt. In weiteren Ausführungsformen kann durch geeignete Auslegung des Systemträgers auch ein komplettes Einfahren in das Innere des Fahrgestells ermöglicht werden.

An der vom Schwenkarm 20 abgewandten Abschlußplatte 70 des Grundkörpers ist im Ausführungsbeispiel der Figur ein Anschluß 90 für einen externen Transportschlauch 92 vorgesehen, mit dem dieser an einen internen Transportschlauch 94 gekoppelt ist. Dieser führt durch das Innere der Hohlwelle 60 zum Schwenkarm 20 und endet mit seinem freien Ende 96 in Fahrtrichtung gesehen vor dem Systemträger 22. Das am Systemträger 22 fixierte freie Ende 96 des internen Transportschlauches 94 ist zur Aufnahme eines Gammastrahlers vorgesehen, mit dem die Innenoberfläche des Rohres bestrahlt werden kann. Mit in der Figur nicht dargestellten Detektoren können dann die durch die Rohrwand hindurchtretenden Gammastrahlen zur Messung der Wanddicke erfaßt werden. Der Gammastrahler selbst wird dabei erst unmittelbar vor Beginn der Messungen fernbedient von außen aus einem Abschirmbehälter durch den Transportschlauch 92, 94 zum freien Ende 96 befördert und mit dem Schwenkarm 20 in Meßposition gebracht.

In der Figur ist eine Prüfposition im Bereich einer Krümmung eines Rohres 100 veranschaulicht. Die gestrichelt eingezeichnete Position des Systemträgers wird durch eine Drehbewegung der Hohlwelle 60 um 180° erreicht, die mit einer Schwenkbewegung des Zwischengliedes 28 und des Endgliedes 32 verknüpft ist. In der Figur ist außerdem zu erkennen, daß in der gestrichelt eingezeichneten Auslenkung des Schwenkarmes 22 der Abstand der Prüfköpfe 38 von einer die Mittellinie einer Schweißnaht darstellenden Umfangslinie 102 anders ist als in der durchgezogenen eingezeichneten Position des Schwenkarmes. Durch eine koordinierte Bewegung des Zwischenglieds 28, des Endglieds 32 und eine entsprechend angepaßte lineare Verschiebung des Basisgliedes 24 in der Hohlwelle 60 ist es möglich, eine Schweißnaht auf ihrem gesamten Innenumfang und auf ihrer gesamten Breite vollständig abzufahren.

In der Figur ist außerdem in Draufsicht ein mittig am Grundkörper 4 angeordnetes Lagergestell 110 zu erkennen, in dem eine parallel zur Längsachse 8 verlaufende Welle 112 gelagert ist, die an ihren Enden jeweils ein Laufrad 114 aufnimmt. Am Umfang des Grundkörpers 4 können beispielsweise drei solcher Lagergestelle 110 angeordnet werden. Diese Lagergestelle 110 können radial ausgestellt werden, so daß im geraden Bereich eines Rohres die Laufräder 114 am Innenumfang anliegen. werden bei anliegenden Laufrädern 114 die Rollen 6 an den Grundkörper 4 herangeschwenkt, so kann bei Antreiben eines der Laufräder 114 der Rohrinnenmanipulator um seine Längsachse gedreht werden, so daß die Rollen 6 beliebig am Umfang positionierbar sind. Die ausstellbaren Lagergestelle 110 bilden somit gemeinsam mit den Laufrädern 114 eine Dreheinrichtung zur Einstellung der Spurlage der Rollen 6.

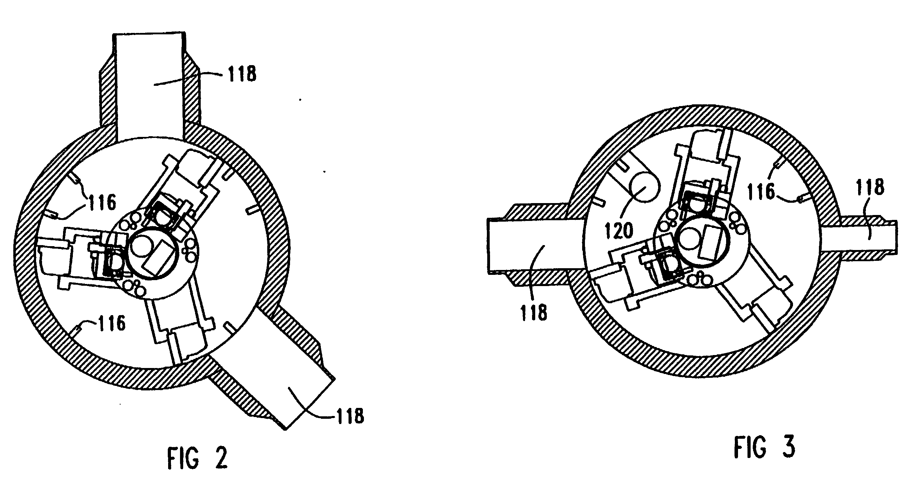

Dies ist notwendig um Hindernisse umfahren zu können, wie sie in **FIG 2** und **3** in Form von Stegen 116, Rohrabzweigungen 118 sowie Inneneinbauten 120, die in Fahrrichtung versetzt zueinander angeordnet sein können, auftreten. In diesen Figuren ist dies anhand eines Rohrinnenmanipulators veranschaulicht, der ein Fahrgestell mit sechs Rollen aufweist, von denen in der Draufsicht nur drei sichtbar sind, wobei die Dreheinrichtung zur Spurlageneinstellung in der Draufsicht gemäß der Figur durch die Rollen 6 und die Rollenlagerung verdeckt ist.

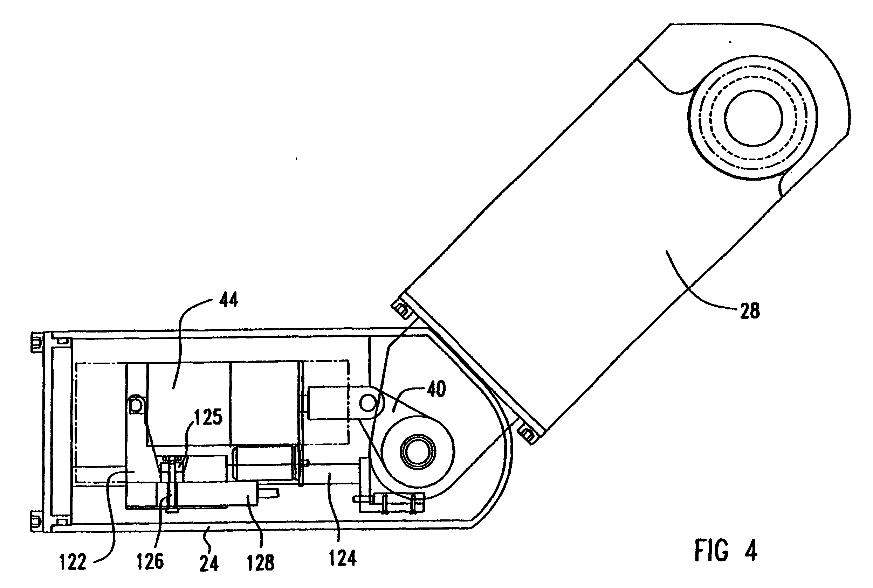

Gemäß **FIG 4** ist der elektrische Linearantrieb 44 schwenkbar auf einem Schlitten 122 gelagert, der auf zwei Führungsstangen 124, von denen in der Draufsicht auf das geöffnete Basisglied 24 nur eine sichtbar ist, in einer vorgegebenen Position arretierbar ist. Eine der Führungsstangen 124 weist hierzu eine Quernut auf, in die gegen eine Federkraft ein Paßstück 125 durch einen Bolzen 126 verspannt ist. Am Schlitten 122 ist eine Notauslösevorrichtung 128 mit einem Meisel angeordnet, der im Falle eines Blockierens des Antriebes 44 ferngesteuert, beispielsweise durch Zündung einer Explosion, ausgelöst wird und den Bolzen 126 durchschlägt, so daß das Paßstück 125 durch die Federkraft aus der Quernut herausgedrückt wird und der Schlitten 122 frei auf den Führungsstangen 124, beispielsweise durch ein von außen betätigtes Zugseil, verschoben werden kann. Dies ermöglicht ein Bergen des gesamten Fahrzeugs auch bei Versagen des elektrischen Antriebs.

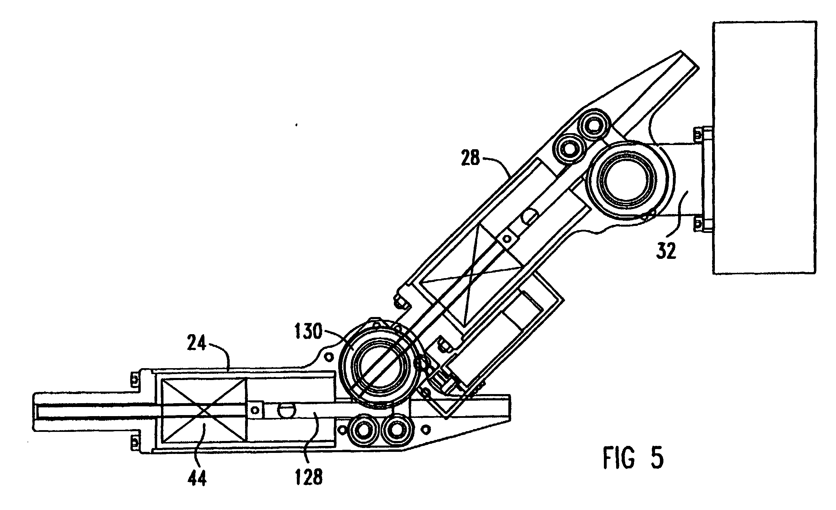

Eine weitere Ausgestaltung eines Schwenkarmes 20 ist in **FIG 5** zu erkennen, bei der ein elektrischer Linearantrieb 44 mit einer Zahnstange 128 vorgesehen ist, die in ein drehfest mit dem benachbarten Glied fixiertes Zahnrad 130 eingreift. In dieser Ausführungsform ist eine schwenkbare Lagerung des Antriebes 44 nicht erforderlich.

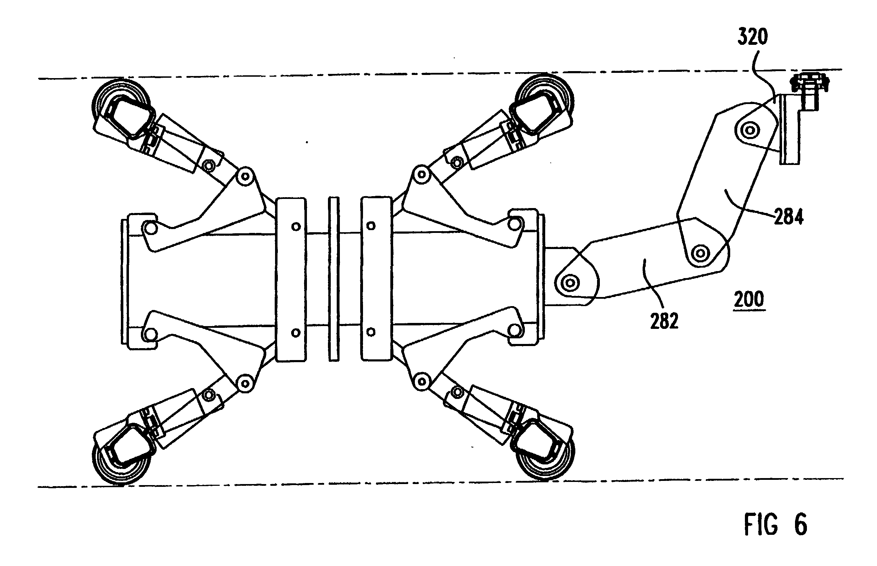

Im Ausführungsbeispiel gemäß **FIG 6** ist ein Rohrinnenmanipulator dargestellt, dessen Schwenkarm 200 zwei schwenkbare Zwischenglieder 282 und 284 sowie ein schwenkbares Endglied 320 enthält, so daß die Anzahl der Freiheitsgrade gegenüber der in Figur 1 dargestellten Ausführungsform von fünf auf sechs erhöht ist. Auch bei dieser Ausführungsform läßt sich der Schwenkarm 200 vollständig in das Innere des Fahrgestells zurückfahren.

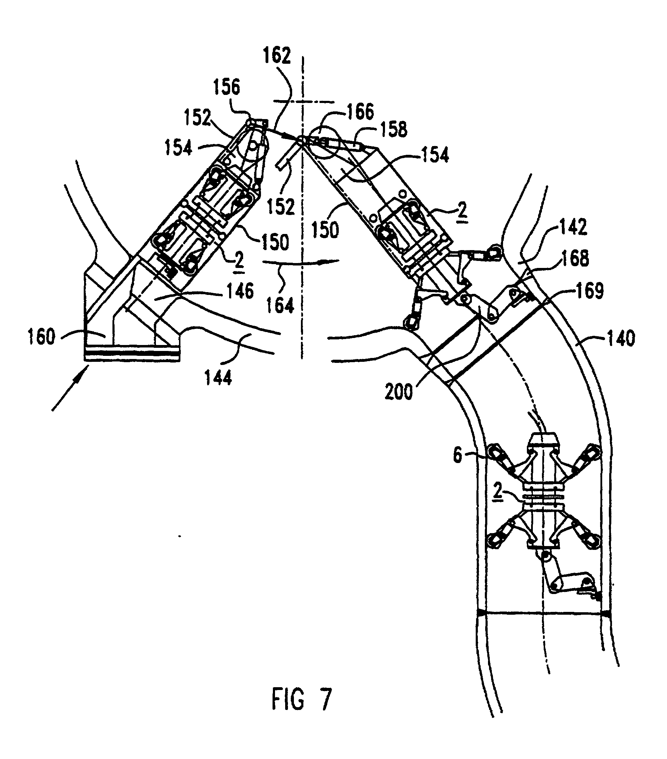

Durch die Möglichkeit, den Schwenkarm in das Innere des Fahrgestells einzufahren, ist das Einführen der gesamten Einrichtung in schwer erreichbare Rohrleitungen erleichtert. Dies ist in **FIG 7** anhand einer Rohrleitung 140 im Primärkreis eines Kernkraftwerks mit Druckwasserreaktor veranschaulicht. Die in der Figur dargestellte Rohrleitung 140 führt von einem Stutzen 142 in einer Kalotte eines Dampferzeugers 144 zu einer in der Zeichnung nicht dargestellten Pumpe und ist nur über ein relativ enges Mannloch 146 des Dampferzeugers 144 zu erreichen. Der Rohrinnenmanipulator wird bei zurückgefahrenem Schwenkarm 200 und eingeklappten Rollen 6 in einen rohrförmigen Hohlkörper 150 eingebracht und gemeinsam mit dem Hohlkörper 150 mit Hilfe eines durch das Mannloch 146 hindurchragenden Galgens 152 über dem Stutzen 142 positioniert. Der Hohlkörper 150 ist hierzu mit einem schalenförmigen Tragrahmen 154 versehen, der in einem Schwenklager 156 am Galgen 152 um eine senkrecht zum Galgen 152 verlaufende Drehachse schwenkbar gelagert ist. Diese Schwenkbewegung wird mit einem Hydraulikzylinder 158 durchgeführt, der zwischen dem Hohlkörper 150 und dem Galgen 152 gelagert ist.

Der Galgen 152 ist auf einem außerhalb des Dampferzeugers 144 positionierbaren Traggestell 160 montiert und wird so ausgerichtet, daß die Drehachse seines Schwenklagers 156 senkrecht zu der von den Mittenachsen des Stutzens 142 und des Mannlochs 146 aufgespannten Ebene orientiert ist. Durch eine Linearverschiebung des Galgens 152, die in der Figur durch einen Pfeil 162 veranschaulicht ist, wird das Schwenklager 156 annähernd auf der Winkelhalbierenden zwischen diesen Mittenachsen positioniert, so daß eine einfache, durch einen Pfeil 164 angedeutete Schwenkbewegung eine hinreichend exakte, koaxial zur Mittenachse des Stutzen 142 ausgerichtete Positionierung des Hohlkörpers 150 ermöglicht.

Am Tragrahmen 154 ist außerdem eine Umlenkrolle 166 für die zur Versorgung des Rohrinnenmanipulators erforderlichen Kabel sowie für ein Bergeseil angeordnet, mit dem der Rohrinnenmanipulator im Versagensfall aus der Rohrleitung geborgen werden kann.

In der Figur ist der Rohrinnenmanipulator in verschiedenen Arbeitspositionen dargestellt. Dabei ist zu erkennen, daß der Hohlkörper 150 nicht nur die Funktion erfüllt, den Rohrinnenmanipulator an die zum Einführen in die Rohrleitung 140 geeignete Stelle zu positionieren, sondern darüber hinaus auch noch ermöglicht, daß mit Hilfe des Rohrinnenmanipulators unmittelbar am Anfang der Rohrleitung positionierte Schweißnähte, im Beispielsfall Schweißnähte 168, 169 am Stutzen 142 des Dampferzeugers 144, geprüft werden können, ohne daß der Rohrinnenmanipulator nach Prüfen der tiefer in der Rohrleitung 140 gelegenen Schweißnähte nochmals in umgekehrter Richtung in die Rohrleitung 140 eingeführt werden muß. Nach Ausfahren des Gelenkarms 200 kann der Rohrinnenmanipulator bereits mit der Prüfung beginnen, wenn sich das Fahrgestell noch vollständig oder wie explizit in der Figur dargestellt noch teilweise innerhalb des Hohlkörpers 150 befindet. Dies ermöglicht eine Prüfung aller Schweißnähte der Rohrleitung 140, ohne daß hierzu ein Umsetzen des Rohrinnenmanipulators erforderlich ist.

## Patentansprüche (Patentansprüche für folgende(n) Vertragsstaat(en): BE, CH, NL, LI)

1. Rohrinnenmanipulator zum Prüfen oder Bearbeiten der Innenoberfläche eines Rohres (100), bei dem an einem innerhalb des Rohres (100) fahrbaren Fahrgestell (2) ein mehrgliedriger Schwenkarm (20, 200) in Richtung einer Längsachse des Fahrgestells (2) verschiebbar angeordnet ist, der an seinem freien Ende einen Systemträger (22) für ein Prüfsystem oder eine Arbeitsvorrichtung trägt, **dadurch gekennzeichnet, dass** der mehrgliedrige Schwenkarm (20, 200) wenigstens teilweise in einen Innenraum des Fahrgestells (2) einfahrbar ist.

2. Rohrinnenmanipulator nach Anspruch 1, bei dem zum Verschieben des Schwenkarms(20, 200) eine innerhalb des Fahrgestells (2) drehbar gelagerte Gewindespindel (50) vorgesehen ist, auf der der Schwenkarm (20, 200) gelagert ist.

3. Rohrinnenmanipulator nach Anspruch 2, bei dem die Gewindespindel (50) parallel und beabstandet zur Längsachse (8) des Fahrgestells angeordnet ist.

4. Rohrinnenmanipulator nach einem der vorhergehenden Ansprüche, bei dem der Schwenkarm (20, 200) am Fahrgestell (2) drehbar um eine zu einer Längsachse (8) des Fahrgestells (2) parallele Drehachse gelagert ist.

5. Rohrinnenmanipulator nach einem der Ansprüche 2 bis 4, bei dem die Gewindespindel (50) in einer drehbar im Fahrgestell (2) gelagerten Hohlwelle (60) angeordnet ist, die den Innenraum zur Aufnahme des Schwenkarms (20, 200) bildet.

6. Rohrinnenmanipulator nach einem der vorhergehenden Ansprüche, bei dem am Fahrgestell (2) eine Dreheinrichtung zum Drehen des Rohrinnenmanipulators um seine Längsachse (8) angeordnet ist.

7. Rohrinnenmanipulator nach Anspruch 6, bei dem die Dreheinrichtung ein radial ausfahrbares Lagergestell (110) umfaßt, in dem wenigstens ein in Umfangsrichtung des Rohres (100) abrollbares Laufrad (114) gelagert ist.

## Patentansprüche (Patentansprüche für folgende(n) Vertragsstaat(en): DE, ES, FR, GB, SE)

1. Rohrinnenmanipulator zum Prüfen oder Bearbeiten der Innenoberfläche eines Rohres (100), bei dem an einem innerhalb des Rohres (100) fahrbaren Fahrgestell (2) ein mehrgliedriger Schwenkarm (20, 200) in Richtung einer Längsachse des Fahrgestells (2) verschiebbar angeordnet ist, der an seinem freien Ende einen Systemträger (22) für ein Prüfsystem oder eine Arbeitsvorrichtung trägt, **dadurch gekennzeichnet, dass** der mehrgliedrige Schwenkarm (20, 200) wenigstens teilweise in einen Innenraum des Fahrgestells (2) einfahrbar ist, wobei das Fahrgestell (2) zur Fortbewegung Arme (10) aufweist und an jedem Arm (10) eine Rolle (6) angeordnet ist.

2. Rohrinnenmanipulator nach Anspruch 1, bei dem zum Verschieben des Schwenkarms(20, 200) eine innerhalb des Fahrgestells (2) drehbar gelagerte Gewindespindel (50) vorgesehen ist, auf der der Schwenkarm (20, 200) gelagert ist.

3. Rohrinnenmanipulator nach Anspruch 2, bei dem die Gewindespindel (50) parallel und beabstandet zur Längsachse (8) des Fahrgestells angeordnet ist.

4. Rohrinnenmanipulator nach einem der vorhergehenden Ansprüche, bei dem der Schwenkarm (20, 200) am Fahrgestell (2) drehbar um eine zu einer Längsachse (8) des Fahrgestells (2) parallele Drehachse gelagert ist.

5. Rohrinnenmanipulator nach einem der Ansprüche 2 bis 4, bei dem die Gewindespindel (50) in einer drehbar im Fahrgestell (2) gelagerten Hohlwelle (60) angeordnet ist, die den Innenraum zur Aufnahme des Schwenkarms (20, 200) bildet.

6. Rohrinnenmanipulator nach einem der vorhergehenden Ansprüche, bei dem am Fahrgestell (2) eine Dreheinrichtung zum Drehen des Rohrinnenmanipulators um seine Längsachse (8) angeordnet ist.

7. Rohrinnenmanipulator nach Anspruch 6, bei dem die Dreheinrichtung ein radial ausfahrbares Lagergestell (110) umfaßt, in dem wenigstens ein in Umfangsrichtung des Rohres (100) abrollbares Laufrad (114) gelagert ist.

## Claims (Claims for the following Contracting State(s): BE, CH, NL, LI)

1. An interior pipe manipulator for testing or processing the inner surface of a pipe (100), in which, on a chassis (2) displaceable within the pipe (100), a multi-section swivel arm (20, 200) is arranged so as to be displaceable in the direction of a longitudinal axis of the chassis (2) and at its free end supports a system support (22) for a testing system or a drive device, **characterised in that** the multi-section swivel arm (20, 200) can be at least partially retracted into an inner chamber of the chassis (2).

2. An interior pipe manipulator according to claim 1, in which, for the displacement of the swivel arm (20, 200), a threaded spindle (50) rotatably mounted within the chassis (2) is provided, on which the swivel arm (20, 200) is mounted.

3. An interior pipe manipulator according to claim 2, in which the threaded spindle (50) is arranged parallel to and at a distance from the longitudinal axis (8) of the chassis.

4. An interior pipe manipulator according to one of the preceding claims, in which the swivel arm (20, 200) is mounted on the chassis (2) so as to be rotatable about an axis of rotation parallel to the longitudinal axis of the chassis (2).

5. An interior pipe manipulator according to one of claims 2 to 4, in which the threaded spindle (50) is arranged in a hollow shaft (60), which is rotatably mounted in the chassis (2) and forms the inner chamber for receiving the swivel arm (20, 200).

6. An interior pipe manipulator according to one of the preceding claims, in which a rotary device for rotating the interior pipe manipulator about its longitudinal axis (8) is arranged on the chassis (2).

7. An interior pipe manipulator according to claim 6, in which the rotary device comprises a radially extendable bearing support (110), in which at least one travelling wheel (114) is mounted, which can roll in the circumferential direction of the pipe (100).

## Claims (Claims for the following Contracting State(s): DE, ES, FR, GB, SE)

1. An interior pipe manipulator for testing or processing the inner surface of a pipe (100), in which, on a chassis (2) displaceable within the pipe (100), a multi-section swivel arm (20, 200) is arranged so as to be displaceable in the direction of a longitudinal axis of the chassis (2) and at its free end supports a system support (22) for a testing system or a drive device, **characterised in that** the multi-section swivel arm (20, 200) can be at least partially retracted into an inner chamber of the chassis (2), the chassis (2) comprising arms (10) for its advance movement and a roller (6) being arranged on each arm (10).

2. An interior pipe manipulator according to claim 1, in which, for the displacement of the swivel arm (20, 200), a threaded spindle (50) rotatably mounted within the chassis (2) is provided, on which the swivel arm (20, 200) is mounted.

3. An interior pipe manipulator according to claim 2, in which the threaded spindle (50) is arranged parallel to and at a distance from the longitudinal axis (8) of the chassis.

4. An interior pipe manipulator according to one of the preceding claims, in which the swivel arm (20, 200) is mounted on the chassis (2) so as to be rotatable about an axis of rotation parallel to the longitudinal axis of the chassis (2).

5. An interior pipe manipulator according to one of claims 2 to 4, in which the threaded spindle (50) is arranged in a hollow shaft (60), which is rotatably mounted in the chassis (2) and forms the inner chamber for receiving the swivel arm (20, 200).

6. An interior pipe manipulator according to one of the preceding claims, in which a rotary device for rotating the interior pipe manipulator about its longitudinal axis (8) is arranged on the chassis (2).

7. An interior pipe manipulator according to claim 6, in which the rotary device comprises a radially extendable bearing support (110), in which at least one travelling wheel (114) is mounted, which can roll in the circumferential direction of the pipe (100).

## Revendications (Revendications pour l'(les) Etat(s) contractant(s) suivant(s): BE, CH, NL, LI)

1. Manipulateur du type chariot pour le contrôle ou le traitement de la surface intérieure d'une conduite (100), suivant lequel un bras (20, 200) pivotant à plusieurs éléments est monté, sur un chariot (2) pouvant rouler à l'intérieur de la conduite (100), à translation dans la direction d'un axe longitudinal du chariot (2), bras qui porte à son extrémité libre un support (22) de système pour un système de contrôle ou un dispositif de travail, **caractérisé en ce que** le bras (20, 200) pivotant à plusieurs éléments peut être rentré au moins partiellement dans un espace intérieur du chariot (2).

2. Manipulateur du type chariot suivant la revendication 1, suivant lequel une broche (50) filetée montée à rotation à l'intérieur du chariot (2) est prévue pour la translation du bras (20, 200) pivotant, broche sur laquelle le bras (20, 200) pivotant est monté.

3. Manipulateur du type chariot suivant la revendication 2, suivant lequel la broche (50) filetée est disposée parallèlement et à distance de l'axe (8) longitudinal du chariot.

4. Manipulateur du type chariot suivant l'une des revendications précédentes, suivant lequel le bras (20, 200) pivotant est monté sur le chariot (2) à rotation autour d'un axe de rotation parallèle à un axe (8) longitudinal du chariot (2).

5. Manipulateur du type chariot suivant l'une des revendications 2 à 4, suivant lequel la broche (50) filetée est disposée dans un arbre (60) creux monté à rotation dans le chariot (2), arbre qui forme l'espace intérieur destiné à recevoir le bras (20, 200) pivotant.

6. Manipulateur du type chariot suivant l'une des revendications précédentes, suivant lequel un dispositif de rotation, destiné à faire tourner le manipulateur du type chariot autour de son axe (8) longitudinal, est disposé sur le chariot (2).

7. Manipulateur du type chariot suivant la revendication 6, suivant lequel le dispositif de rotation comprend un bâti (110) de montage radialement déployable, dans lequel est montée au moins une roue (11.4) de roulement pouvant rouler dans la direction circonférentielle de la conduite (100).

## Revendications (Revendications pour l'(les) Etat(s) contractant(s) suivant(s): DE, ES, FR, GB, SE)

1. Manipulateur du type chariot pour le contrôle ou le traitement de la surface intérieure d'une conduite (100), suivant lequel un bras (20, 200) pivotant à plusieurs éléments est monté, sur un chariot (2) pouvant rouler à l'intérieur de la conduite (100), à translation dans la direction d'un axe longitudinal du chariot (2), bras qui porte à son extrémité libre un support (22) de système pour un système de contrôle ou un dispositif de travail, **caractérisé en ce que** le bras (20, 200) pivotant à plusieurs éléments peut être rentré au moins partiellement dans un espace intérieur du chariot (2), le chariot (2) ayant des bras (10) pour son avancement et un galet (6) de roulement étant disposé sur chaque bras (10).

2. Manipulateur du type chariot suivant la revendication 1, suivant lequel une broche (50) filetée montée à rotation à l'intérieur du chariot (2) est prévue pour la translation du bras (20, 200) pivotant, broche sur laquelle le bras (20, 200) pivotant est monté.

3. Manipulateur du type chariot suivant la revendication 2, suivant lequel la broche (50) filetée est disposée parallèlement et à distance de l'axe (8) longitudinal du chariot.

4. Manipulateur du type chariot suivant l'une des revendications précédentes, suivant lequel le bras (20, 200) pivotant est monté sur le chariot (2) à rotation autour d'un axe de rotation parallèle à un axe (8) longitudinal du chariot (2).

5. Manipulateur du type chariot suivant l'une des revendications 2 à 4, suivant lequel la broche (50) filetée est disposée dans un arbre (60) creux monté à rotation dans le chariot (2), arbre qui forme l'espace intérieur destiné à recevoir le bras (20, 200) pivotant.

6. Manipulateur du type chariot suivant l'une des revendications précédentes, suivant lequel un dispositif de rotation, destiné à faire tourner le manipulateur du type chariot autour de son axe (8) longitudinal, est disposé sur le chariot (2).

7. Manipulateur du type chariot suivant la revendication 6, suivant lequel le dispositif de rotation comprend un bâti (110) de montage radialement déployable, dans lequel est montée au moins une roue (114) de roulement pouvant rouler dans la direction circonférentielle de la conduite (100).
